# EUROPÄISCHE PATENTANMELDUNG

(11) **EP 1 057 613 A1**
(43) Veröffentlichungstag der Anmeldung: **06.12.2000**
(21) Anmeldenummer: 00101695.5
(22) Anmeldetag: 03.02.2000
(51) Int. Cl.: B29C 53/08, B29C 57/00

(54) **Vorrichtung zum Herstellen eines gekrümmten Schlauches**

(30) Priorität: 31.05.1999 DE 29909485 U
(71) Anmelder: VERITAS AG, 63571 Gelnhausen (DE)
(72) Erfinder: Halena, Peter, 63628 Bad Soded-Salmünster (DE); Welte, Manfred, 63607 Wächtersbach (DE); Flach, Klaus, 36396 Steinau (DE)
(74) Vertreter: Grünecker, Kinkeldey, Stockmair & Schwanhäusser Anwaltssozietät

(57) **Zusammenfassung**

Die Erfindung bezieht sich auf eine Vorrichtung zum Herstellen eines gekrümmten Schlauches, vorzugsweise Krümmerschlauch mit Textileinlage, mit einem gekrümmten Dorn (3) zum Aufschieben eines Schlauchrohlings (2) Um die Herstellung derartiger gekrümmter Schlauche zu vereinfachen ist erfindungsgemäß vorgesehen, daß die Vorrichtung eine gegenüber dem Dorn (3) festlegbare Saugglocke (8) aufweist, die auf einem Endabschnitt (6) des Schlauchrohlings aufsteckbar und mit einer Anlagefläche (26) versehen ist, gegen die der Schlauchrohling (2) zum axialen Ausrichten durch das Aufbringen von Unterdruck stirnseitig in Anlage bring bar ist.

## Beschreibung

Die vorliegende Erfindung bezieht sich auf eine Vorrichtung zum Herstellen eines gekrümmten Schlauches, vorzugsweise eines Krümmerschlauches mit Textileinlage, mit einem gekrümmten Dorn zum Aufschieben eines Schlauchrohlings.

Derartige Vorrichtungen sind aus dem Stand der Technik bekannt. Zum Herstellen eines Krümmerschlauches werden die Rohlinge zunächst auf den gekrümmten Dorn aufgeschoben. Der gekrümmte Dorn gibt den fertigen Schläuchen die gewünschte Krümmung. Zum Fertigstellen der Schläuche werden die auf den Dorn aufgeschobenen Schlauchrohlinge zusammen mit dem Dorn in einen Autoklaven gegeben und dort vulkanisiert. Nach dem Vulkanisieren können die fertigen Schläuche wieder von dem Dorn abgezogen werden. Die fertiggestellten Schläuche können z.B. als Ansaugkrümmerschläuche für Verbrennungsmotoren verwendet werden.

Aufgrund des Aufschiebens der zunächst geraden Schlauchrohlinge auf den gekrümmten Dom erfolgt an den Krümmungsinnenradien ein Stauchen des Schlauchrohlings und an den Außenradien ein Strecken. Durch dieses Stauchen und Strecken verlaufen die Stirnseiten des Schlauchrohlings gegenüber seinem Ausgangszustand nicht mehr senkrecht zu seiner Längserstreckung, sondern je nach Krümmung mehr oder weniger geneigt. Zur Montage der fertiggestellten Schläuche (z. B. an einem Ansaugstutzen) werden üblicherweise Schlauchschellen verwendet, die nahe an den Endabschnitten den auf den Ansaugstutzen aufgesteckten Schlauch in bekannter Weise sichern. In diesem Aufsteckbereich verlaufen die Schläuche im wesentlichen gerade. Um ein möglichst platzsparendes Aufstecken bei möglichst gleichmäßig umlaufende Aufsteckfläche sicherzustellen, werden die fertiggestellten Schläuche an ihren Endabschnitten abgeschnitten, so daß die Stirnseiten der Schläuche im Bereich der Aufsteckabschnitte wieder senkrecht zur Längserstreckung verlaufen. Der abgeschnittene Teil wird als Abfall entsorgt. Aufgrund der sehr großen Stückzahlen, mit der die Schläuche hergestellt werden, und aufgrund der hohen Materialkosten der Schläuche wäre es wünschenswert, wenn sich derartige Abfälle vermieden ließen. Zudem erfordert das Abschneiden einen zusätzlichen Arbeitsschritt, der die Herstellungskosten der Schläuche erhöht.

Die Aufgabe der Erfindung ist es daher, eine Vorrichtung der eingangs genannten Art derart zu verbessern, daß sich die Zahl der Arbeitsschritte zur Fertigstellung der Schläuche verringern und Abfall vermeiden läßt.

Die Aufgabe wird erfindungsgemäß gelöst durch eine Vorrichtung der eingangs genannten Art, bei der eine gegenüber dem Dorn axial festlegbare Saugglocke vorgesehen ist, die auf einen Endabschnitt des Schlauchrohlings aufsteckbar und mit einer Anlagefläche versehen ist, gegen die der Schlauchrohling zum axialen Ausrichten durch das Aufbringen von Unterdruck stirnseitig in Anlage bringbar ist.

Diese Lösung ist einfach, und hat den Vorteil, daß bereits der Schlauchrohling mit der Saugglocke derart ausrichtbar ist, daß ein Abschneiden der Endstücke nach dem Vulkanisieren nicht mehr erforderlich ist. Durch die Saugglocke kann der Schlauchrohling bereits während der Herstellung axial in der gewünschten Weise ausgerichtet werden. Somit läßt sich Abfall vermeiden und zusätzlich die Anzahl der Verfahrensschritte zum Herstellen des Krümmerschlauches reduzieren. Die Stirnseite muß jedoch nicht vollständig an der Anlagefläche anliegen. In Einzelfällen genügt auch teilweises Anliegen. Auch kann die Neigung der Anlagefläche zur Längserstreckung des Schenkels bzw. Schlauchrohlings im Bereich der Stirnfläche je nach Bedarf auch geneigt verlaufen.

In einer vorteilhaften Weiterbildung der Erfindung kann die Saugglocke einen Halteabschnitt aufweisen, mit dem die Saugglocke auf dem Dorn aufsteckbar ist. Dadurch läßt sich die Saugglocke in besonders einfacher Weise auf dem Dorn montieren.

Von Vorteil kann es zudem sein, wenn die Saugglocke einen Aufstreckabschnitt aufweist, der auf den Endabschnitt des Schlauchrohlings aufsteckbar ist und der Aufsteckabschnitt und der Halteabschnitt über die Anlagefläche miteinander verbunden sind. Durch diese Gestaltung läßt sich durch einfaches Aufschieben der Saugglocke auf den Dorn die Saugglocke einerseits am Dorn anbringen und gleichzeitig auf den Schlauchrohling aufschieben.

Dabei kann es sich als günstig erweisen, wenn der Dorn einen kreisrunden Querschnitt aufweist und die Saugglocke im wesentlichen rohrförmig ist, wobei der Innendurchmesser des Aufsteckabschnitts größer als der Innendurchmesser des Halteabschnitts ist. Bei derartigen kreisrunden Querschnitten läßt sich einerseits die Saugglocke kostengünstig herstellen und andererseits läßt sich eine Abdichtung zwischen Saugglocke und Schlauchrohling sowie Saugglocke und Dorn sicherstellen.

Auch kann es sich als vorteilhaft erweisen, wenn die Anlagefläche sich radial zur Längserstreckung der Saugglocke erstreckt. Dann läßt sich im Bereich des Endabschnitts des fertigen Schlauches eine radial verlaufende Stirnfläche des Schlauches realisieren.

Zudem kann es sich als vorteilhaft erweisen, wenn der Dorn im Bereich der Saugglocke gerade verläuft. Dadurch lassen sich Dichtprobleme vermeiden. Auch kann die Saugglocke dann besonders einfach als Drehteil ausgebildet sein.

In einer vorteilhaften Weiterbildung der Erfindung kann der Aufsteckabschnitt einen Formgebungsabschnitt aufweisen, durch den eine Markierung auf dem Endabschnitt des Schlauches aufbringbar ist Dann lassen sich neben dem axialen Ausrichten des Endabschnitts des Schlauches zusätzlich auch Montagehilfen anbringen, wie z.B. umlaufende Nuten, die den Werker auf das Anbringen von Schlauchschellen und dergleichen hinweisen. Bei den bislang bekannten Verfahren mußten derartige Markierungen oder Montagehilfen in den fertiggestellten Schlauch eingeschliffen werden. Dadurch entstand ein zusätzlicher, erheblicher Arbeitsaufwand. Mit der neuen Vorrichtung können solche Markierungen bereits bei der Herstellung des Schlauches berücksichtigt werden.

Von Vorteil kann es dabei sein, wenn der Formgebungsabschnitt durch einen ringförmig umlaufenden Abschnitt geringeren Durchmessers gebildet ist. Dadurch läßt sich z.B. eine umlaufende Nut für das Anbringen einer Schlauchschelle am Endabschnitt des Schlauches realisieren. Da durch die Saugglocke ein Ausrichten der Stirnseite des Schlauches erfolgt, kann die umlaufende Nut sehr nahe an der Stirnseite des Schlauches angeordnet werden, wobei sie parallel zur Stirnseite des Schlauches verläuft. Auch dadurch läßt sich der Schlauch gegenüber herkömmlichen Verfahren insgesamt verkürzen.

Um das Aufschieben der Saugglocke auf den Schlauchrohling zu erleichtern, kann der Übergang zwischen Formgebungsabschnitt und Aufsteckabschnitt gegenüber einer Ebene senkrecht zur Längserstreckung der Saugglocke in der Art einer Führungsfase verlaufen. Durch diese Gestaltung kann es natürlich auch möglich sein, die Saugglocke wieder leichter vom fertigen Schlauch nach dem Vulkanisieren abzuziehen.

Von Vorteil kann es zudem sein, wenn der Innendurchmesser des Aufsteckabschnitts im wesentlichen dem Außendurchmesser des Schlauchrohlings entspricht. Dadurch kann ein Abdichten zwischen Saugglocke und Schlauchrohling sichergestellt werden.

Auch kann es sich als vorteilhaft erweisen, wenn die Länge des Aufsteckabschnitts etwa dem halben Außendurchmesser des Schlauchrohlings entspricht. Ein derartiges Größenverhältnis kann ein einfaches Aufstecken der Saugglocke gewährleisten und andererseits ein genügendes Abdichten zwischen Saugglocke und Schlauchrohling sicherstellen.

In einer vorteilhaften Weiterbildung der Erfindung kann die Saugglocke einen Fügeabschnitt aufweisen, an dem die Saugglocke gegenüber dem Aufsteckabschnitt aufgeweitet ist. Dann kann die Saugglocke leichter aufgesteckt werden. Insbesondere kann es sich als günstig erweisen, wenn der Fügeabschnitt gerundet ist.

Auch kann es sich als günstig erweisen, wenn in der Anlagefläche Saugkanäle angeordnet sind, durch die der Unterdruck auf die Stirnseite des Schlauchrohlings aufbringbar ist. Dann läßt sich die Saugglocke besonders kompakt gestalten.

Auch kann es sich als vorteilhaft erweisen, wenn die Saugkanäle über einen Verbindungskanal in der Saugglocke miteinander verbunden sind, und der Verbindungskanal über einen Sauganschluß mit einer einen Unterdruck erzeugenden Einrichtung verbindbar ist. Auch dadurch kann die Saugglocke sehr kompakt gestaltet werden.

Die Herstellung der Saugglocke kann zusätzlich vereinfacht werden, wenn die Anlagefläche an einem in der Saugglocke angebrachten Ring angeordnet ist, wobei die Saugkanäle sich axial erstrecken.

Von Vorteil kann es dabei sein, wenn der Verbindungskanal durch eine ringförmige Nut in der Saugglocke gebildet wird, die durch den Ring verschlossen ist. Um die Wirkung der Saugglocke zu verbessern, kann die Saugglocke am vom Endabschnitt des Schlauches abgewandten Ende eine Dichteinrichtung aufweisen.

Von Vorteil kann es dabei sein, wenn die Dichteinrichtung einen in einer Dichtnut der Saugglocke aufgenommenen O-Ring aufweist, der sich zwischen Dorn und Saugglocke abstützt. Auf diese Weise läßt sich mit einfachen Mitteln ein wirksames Abdichten zwischen Dorn und Saugglocke realisieren.

Zudem kann eine Befestigungseinrichtung zum axialen Festlegen der Saugglocke gegenüber dem Dorn vorgesehen sein. Dadurch läßt sich auf einfache Weise ein axiales Verrutschen der Saugglocke auf dem Dorn sicherstellen.

Von Vorteil kann es dabei sein, wenn die Befestigungseinrichtung eine in eine sich im wesentlichen Radiale, mit einer geraden Öffnung der Saugglocke im Halteabschnitt eingeschraubte Schraube aufweist, die mit dem Dorn in Anlage gebracht ist. Auf diese Weise läßt sich das axiale Festlegen der Saugglocke auf dem Dorn in einer besonders kostengünstigen Weise realisieren.

Mit der erfindungsgemäßen Vorrichtung läßt sich somit ein Verfahren zum Herstellen eines gekrümmten Schlauchs durchführen, bei dem ein auf einen Dorn aufgeschobener Schlauchrohling vorzugsweise aus Elastomer, mittels einer einen Unterdruck erzeugenden Einrichtung vor dem Vulkanisieren achsial ausgerichtet wird. Dadurch läßt sich das Herstellen der Schläuche stark vereinfachen. Von Vorteil kann es dabei sein, wenn die den Unterdruck erzeugende Einrichtung eine Saugglocke aufweist, die vor dem Ausrichten des Schlauchrohlings zumindest abschnittsweise auf den Dorn und den Schlauchrohling aufgeschoben wird. Dabei kann es sich auch als vorteilhaft erweisen, wenn der Unterdruck während des Vulkanisierens aufrecht erhalten wird. Auch dadurch läßt sich die Herstellung der Schläuche vereinfachen.

Nachfolgend wird die Erfindung anhand einer in der einzigen Figur dargestellten Ausführungsform der erfindungsgemäßen Vorrichtung erläutert.

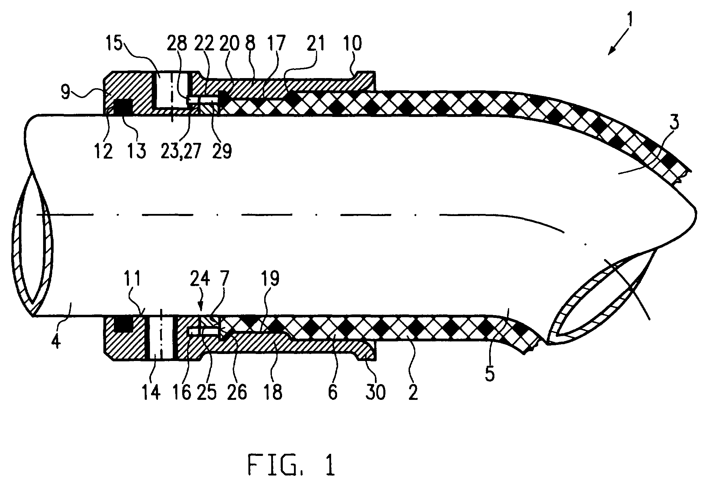

In Fig. 1 ist die erfindungsgemäße Vorrichtung 1 mit einem teilweise dargestellten Schlauchrohling 2 abgebildet. Die Vorrichtung 1 weist einen Dorn 3 aus Metall auf, der mit einem kreisförmigen Querschnitt versehen ist. Der Dorn 3 ist nur teilweise dargestellt, mit einem geraden Abschnitt 4 und einem gebogenen Abschnitt 5. Im Bereich des geraden Abschnitts 4 ist die Außenumfangsoberfläche des Dorns 3 im wesentlichen zylindrisch. Im Querschnitt gesehen ist der Dorn kreisförmig, wobei er in unterschiedliche Richtungen gebogen sein kann, wie dies durch den gebogenen Abschnitt 5 stellvertretend dargestellt ist. Sowohl im geraden Abschnitt, wie auch im gebogenen Abschnitt 5 ist der Durchmesser jeweils gleich.

In der Darstellung in der Figur ist der Schlauchrohling 2 auf den Dorn aufgeschoben. Der Innendurchmesser des Schlauchs ist vor dem Aufschieben geringfügig kleiner als der Außendurchmesser des Dorns. Der aufgeschobene Schlauchrohling sitzt somit fest auf dem Dorn und folgt dessen Außenkontur. Der Schlauchrohling selbst besteht aus einem Elastomer mit Textileinlage. Alternativ sind auch Schlauchrohlinge ohne Textileinlage möglich, der Schlauchrohling besitzt einander gegenüberliegende Endabschnitte, von denen ein Endabschnitt 6 in der Figur dargestellt ist. Der Endabschnitt verfügt über eine Stirnseite 7, die sich bei nichtaufgeschobenem Schlauchrohling im wesentlichen senkrecht zu seiner Längserstreckung verläuft.

Die Vorrichtung 1 verfügt weiterhin über eine Saugglocke 8 mit einem Halteabschnitt 9 und einem Aufsteckabschnitt 10. Der Aufsteckabschnitt 10 verfügt über eine Führungsfläche 11, die im wesentlichen zylindrisch ist und deren Innendurchmesser im wesentlichen dem Außendurchmesser des Dorns 3 entspricht. Über den Aufsteckabschnitt 10 ist die Saugglocke 8 axial verschieblich und gleitend geführt. An dem dem Aufsteckabschnitt 10 abgewandten Ende des Halteabschnitts 9 ist in der Führungsfläche 11 eine umlaufende Nut 12 ausgebildet, in der ein O-Ring 13 angeordnet ist. Der O-Ring 13 stützt sich zwischen der Nut 12 und der Umfangsoberfläche des Dorns 3 ab. Am Halteabschnitt ist zudem eine Durchgangsöffnung 14 vorgesehen, die ein Gewinde aufweist, durch die eine nicht dargestellte Schraube eingeschraubt werden kann, die sich im eingeschraubten Zustand an der Umfangsoberfläche des Dorns 3 abstützt. Durch diese nicht dargestellte Schraube kann die Saugglocke 8 axial und radial gegenüber dem Dorn 3 festgelegt werden. Durch Lösen dieser Schraube ist die Saugglocke 8 wiederum verschieblich. Die Durchgangsöffnung 14 erstreckt sich im wesentlichen radial zum Dorn 3.

Auf der der Durchgangsöffnung 14 gegenüberliegenden Seite ist ein Anschluß 15 vorgesehen, in den ein Schraubnippel einschraubbar ist. Eine Ringnut 16 ist radial versetzt zur Führungsfläche 11 vorgesehen und erstreckt sich in Axialrichtung, wobei sie den Anschluß 15 schneidet. Dadurch kommuniziert der Anschluß 15 mit der Ringnut. Die Saugglocke 8 verfügt über eine Aufsteckfläche 17, die einen größeren Innendurchmesser als die Führungsfläche 11 aufweist. Die Aufsteckfläche 17 ist ein Teil des Aufsteckabschnitts 10, wobei der Innendurchmesser der Aufsteckfläche 17 im wesentlichen dem Außendurchmesser des Schlauchrohlings 2 entspricht. An dem den Halteabschnitt zugewandten Ende des Aufsteckabschnitts ist ein Formgebungsabschnitt 18 vorgesehen, der eine Formgebungsfläche 19 aufweist, die sich im wesentlichen zylindrisch und koaxial zur Längserstreckung der Saugglocke 9 erstreckt, und deren Innendurchmesser geringfügig kleiner als der Innendurchmesser der Aufsteckfläche 17 ist. An den Übergängen zwischen Aufsteckfläche 17 und Formgebungsfläche 19 befinden sich umlaufende Fügefasen 20 und 21.

An die Aufsteckfläche 17 schließt sich in Richtung zum Halteabschnitt 9 eine Aufnahmefläche 22 an, die konzentrisch zur Führungsfläche 11, der Aufsteckfläche 17 und der Formgebungsfläche 19 verlauft. Der Innendurchmesser dieser Aufnahmefläche 22 ist kleiner oder gleich dem Innendurchmesser der Formgebungsfläche 19. An die Aufnahmefläche 22 schließt sich eine radial erstreckende Stützfläche 23 an. Die Aufnahmefläche 22 und die Stützfläche 23 bilden eine Aufnahme 24 der Saugglocke 8 für einen Ring 25, der eine Anlagefläche 26 aufweist, an der die Stirnseite 7 des Schlauchrohlings 2 anliegen kann. Der Ring 25 verfügt über eine Deckfläche 27, die sich parallel zur Anlagefläche 26 erstreckt, und die die Ringnut 16 abdeckt, um einen Verbindungskanal 28 zu bilden. Zusätzlich befinden sich im Ring 25 Durchgangsöffnungen, die Saugkanäle 29 bilden. Diese Saugkanäle erstrecken sich koaxial zur Längserstreckung der Saugglocke 8. Sie sind gleichmäßig am Umfang verteilt und münden in die Anlagefläche 26 und den Verbindungskanal 28. Der Ring 25 kann z.B. in die Aufnahme 24 eingepreßt sein, oder aber mit ihr verlötet sein, wobei der Außenumfang des Rings zylindrisch ist und einen Durchmesser aufweist, der im wesentlichen dem Durchmesser in der Aufnahmefläche 22 entspricht.

An dem vom Halteabschnitt abgewandten Ende verfügt die Saugglocke am Aufsteckabschnitt über einen Fügeabschnitt 30, an dem die Aufsteckfläche 17 trichterförmig erweitert ist. Dadurch läßt sich die Saugglocke leichter aufschieben.

Nachfolgend wird die Wirkungs- und Funktionsweise der Erfindung näher erläutert.

Zum Herstellen der gekrümmten Schläuche, die z.B. als Ansaugkrümmerschläuche bei Verbrennungsmotoren verwendet werden können, werden die Schlauchrohlinge auf den Dorn 3 aufgeschoben, wobei sie sich der gebogenen Kontur des Dorns 3 anpassen. Aufgrund der gebogenen Kontur des Dorns 3 werden die Schlauchrohlinge an den Innenradien gestaucht und an den Außenradien gestreckt. In der Fig. 1 befinden sich der Innenradius an der Unterseite des Dorns 3 und der Außenradius an der Oberseite des Dorns 3. Da die Schlauchrohlinge senkrecht zu ihrer zunächst geraden Längserstreckung abgeschnitten wurden, verläuft die Stirnseite 7 zunächst senkrecht zur Schlauchlängserstreckung und nach dem Aufschieben auf den Dorn 3 ist die Stirnseite 7 gegenüber der Ausgangslage in Fig. 1 nach links geneigt. Diese Neigung entsteht aufgrund des Zusammenstauchens des Schlauchrohlings am Innenradius und des Dehnens am Außenradius. Der am Außenradius gedehnte Schlauch zieht somit den zugehörigen Stirnseitenabschnitt in der Darstellung in Fig. 1 nach links. Die Stirnseite ist somit nicht mehr kreisförmig, sondern elliptisch.

Als nächstes wird nun auf den Dorn 3 die Saugglocke 8 aufgesetzt, wobei der Halteabschnitt 9 auf den Dorn 3 aufgeschoben wird und der Aufsteckabschnitt 10 über den Schlauchrohling 2 geschoben wird, solange bis die Anlagefläche 26 gegen die Stirnseite 7 zu liegen kommt, wobei sie im vorliegenden Fall zunächst nur mit dem unteren Teil in der Darstellung in der Fig. 1 in Berührung kommt. Bei diesem Aufschieben wird die Formgebungsfläche 19 auf den Schlauchrohling 2 aufgeschoben, wobei der Schlauchrohling im Bereich der Formgebungsfläche 19 in radialer Richtung zusammengedrückt wird. Dies ist in der Figur gut zu sehen. Das Aufschieben der Saugglocke 8 auf den Dorn 3 und den Endabschnitt 6 des Schlauchrohlings 2 wird dabei durch den Fügeabschnitt 30 erleichtert.

Als nächster Schritt wird in die Durchgangsöffnung 14 eine nicht dargestellte Sicherungsschraube eingeschraubt, die mit der Außenumfangsfläche des Dorns 3 in Kontakt gebracht wird und die Saugglocke 8 sowohl in radialer, wie auch axialer Richtung gegenüber dem Dorn 3 festlegt.

Anschließend wird ein Schraubnippel in den Anschluß 15 eingeschraubt, der über eine nicht dargestellte Leitung z.B. mit einer Vakuumpumpe verbunden ist. Der Anschluß erfolgt in bekannter Weise und ist daher nicht näher erläutert.

Im nachfolgenden Schritt wird nun die Vakuumsaugpumpe in Betrieb genommen und erzeugt über den Anschluß 15, den Verbindungskanal 28 und die Saugkanäle 29 im Bereich zwischen der Anlagefläche 26 und der Stirnseite 7 einen Unterdruck. Durch diesen Unterdruck verschiebt sich der Schlauchrohling in der Darstellung in Fig. 1 an der Oberseite des Dorns 3, so daß die Stirnseite 7 vollständig mit der Anlagefläche 26 in Anlage gebracht wird. Um ein solches Verschieben des Schlauchrohlings 2 zu erreichen, ist darauf zu achten, daß der Innendurchmesser in der Aufsteckfläche 17 im wesentlichen dem Außendurchmesser des Schlauchrohlings und der Innendurchmesser des Schlauchrohlings im wesentlichen dem Außendurchmesser des Dorns 3 entspricht, um ein unerwünschtes Eindringen von Luft in den Zwischenraum zwischen der Anlagefläche 26 und der Stirnseite 7 des Schlauchrohlings zu vermeiden. Ein solches Eindringen von Luft wird zudem auch durch den O-Ring verhindert.

Sobald sich die Stirnseite 7 des Schlauchrohlings 2 mit der Anlagefläche 26 in Anlage befindet, kann der Schlauchrohling 2 mit der Vorrichtung aus Dorn und Saugglocke in einen Autoklaven zum Vulkanisieren eingebracht werden. Dabei kann entweder der Unterdruck weiter aktiv durch die Vakuumpumpe aufrechterhalten werden, oder aber der Anschluß 15 verschlossen werden, um ein Eindringen von Luft zu verhindern.

Nach dem Vulkanisieren im Autoklaven behält der nunmehr fertiggestellte Schlauch selbständig die durch die Saugglocke 8 vorgegebene Form bei. Das bedeutet, durch die Formgebungsfläche 19 mit den Fügefasen 20 und 21 ist eine ringförmige Nut zur Aufnahme einer Schlauchschelle in die Außenoberfläche des Schlauchs eingeformt. Die Nut verläuft auch parallel zur Stirnseite 7 und ein Nachbearbeiten ist nicht mehr erforderlich. Der fertige Schlauch kann nunmehr unmittelbar montiert werden.

Durch die erfindungsgemäße Vorrichtung und bei Einhalten der vorgegebenen Verfahrensschritte erfolgt somit eine Reduktion der Arbeitsschritte zum Fertigstellen des Schlauches. Es ist nun nicht mehr erforderlich, die aufgrund der Krümmung entstandenen schrägen Stirnseiten abzuschneiden und die Nut zur Aufnahme der Schlauchschelle einzuschleifen. Der durch die erfindungsgemäße Vorrichtung hergestellte Schlauch erhält aufgrund der umlaufenden Nut für die Schlauchschelle eine Markierung, so daß ein Werker erkennen kann, wo er den die Schlauchschelle anbringen soll.

## Patentansprüche

1. Vorrichtung zum Herstellen eines gekrümmten Schlauches, vorzugsweise Krümmerschlauches mit Textileinlage, mit einem gekrümmten Dorn (3) zum Aufschieben eines Schlauchrohlings (2), **dadurch gekennzeichnet**, daß eine gegenüber dem Dorn (3) axial festlegbare Saugglocke (8) vorgesehen ist, die auf einen Endabschnitt (6) des Schlauchrohlings (2) aufsteckbar und mit einer Anlagefläche (26) versehen ist, gegen die der Schlauchrohling zum axialen Ausrichten durch das Aufbringen von Unterdruck stirnseitig in Anlage bringbar ist.

2. Vorrichtung nach Anspruch 2, **dadurch gekennzeichnet**, daß die Saugglocke einen Halteabschnitt (9) aufweist, mit dem die Saugglocke (8) auf den Dorn (3) aufsteckbar ist.

3. Vorrichtung nach Anspruch 1 oder 2, **dadurch gekennzeichnet**, daß die Saugglocke (8) einen Aufsteckabschnitt (10) aufweist, der auf den Endabschnitt (6) des Schlauchrohlings (2) aufsteckbar ist, und der Aufsteckabschnitt und der Halteabschnitt (9) über die Anlagefläche (26) miteinander verbunden sind.

4. Vorrichtung nach einem der vorangegangenen Ansprüche, **dadurch gekennzeichnet**, daß der Dorn einen kreisrunden Querschnitt aufweist und die Saugglocke im wesentlichen rohrförmig ist, wobei der Innendurchmesser des Aufsteckabschnitts größer als der Innendurchmesser des Halteabschnitts ist.

5. Vorrichtung nach einem der vorangegangenen Ansprüche, **dadurch gekennzeichnet**, daß der Dorn (3) im Bereich der Saugglocke (8) gerade verläuft.

6. Vorrichtung nach einem der vorangegangenen Ansprüche, **dadurch gekennzeichnet**, daß der Aufsteckabschnitt (10) einen Formgebungsabschnitt (18) aufweist, durch den eine Markierung auf den Endabschnitt des Schlauches aufbringbar ist.

7. Vorrichtung nach einem der vorangegangenen Ansprüche, **dadurch gekennzeichnet**, daß der Formgebungsabschnitt eine ringförmige Formgebungsfläche (19) aufweist, die einen kleineren Durchmesser als der Formgebungsabschnitt aufweist.

8. Vorrichtung nach einem der vorangegangenen Ansprüche, **dadurch gekennzeichnet**, daß der Übergang zwischen Formgebungsabschnitt und Aufsteckabschnitt gegenüber einer Ebene senkrecht zur Längserstreckung der Saugglocke in der Art einer Fügefase verläuft.

9. Vorrichtung nach einem der vorangegangenen Ansprüche, **dadurch gekennzeichnet**, daß der Innendurchmesser des Aufsteckabschnitts im wesentlichen dem Außendurchmesser des Schlauchrohlings entspricht.

10. Vorrichtung nach einem der vorangegangenen Ansprüche, **dadurch gekennzeichnet**, daß die Länge des Aufsteckabschnitts etwa dem halben Außendurchmesser des Schlauchrohlings entspricht.

11. Vorrichtung nach einem der vorangegangenen Ansprüche, **dadurch gekennzeichnet**, daß die Saugglocke einen Fügeabschnitt (30) aufweist, an dem die Saugglocke gegenüber dem Aufsteckabschnitt aufgeweitet ist.

12. Vorrichtung nach einem der vorangegangenen Ansprüche, **dadurch gekennzeichnet**, daß in die Anlagefläche Saugkanäle (29) münden, durch die der Unterdruck auf die Stirnseite (7) des Schlauchrohlings (2) aufbringbar ist.

13. Vorrichtung nach einem der vorangegangenen Ansprüche, **dadurch gekennzeichnet**, daß die Saugkanäle über einen Verbindungskanal (28) in der Saugglocke miteinander verbunden sind und der Verbindungskanal über einen Sauganschluß (15) mit einer einen Unterdruck erzeugenden Einrichtung verbindbar sind.

14. Vorrichtung nach einem der vorangegangenen Ansprüche, **dadurch gekennzeichnet**, daß die Anlagefläche an einem in der Saugglocke angebrachten Ring angeordnet ist, wobei die Saugkanäle (29) sich axial erstrecken.

15. Vorrichtung nach einem der vorangegangenen Ansprüche, **dadurch gekennzeichnet**, daß der Verbindungskanal (28) durch eine ringförmige Nut in der Saugglocke gebildet wird, der durch den Ring verschlossen wird.

16. Vorrichtung nach einem der vorangegangenen Ansprüche, **dadurch gekennzeichnet**, daß die Saugglocke am vom Endabschnitt des Schlauches abgewandten Ende eine Dichtvorrichtung aufweist.

17. Vorrichtung nach einem der vorangegangenen Ansprüche, **dadurch gekennzeichnet**, daß die Dichtvorrichtung einen in einer Dichtnut (12) der Saugglocke aufgenommenen O-Ring (13) aufweist, der sich zwischen Dorn und Saugglocke abstützt.

18. Vorrichtung nach einem der vorangegangenen Ansprüche, **dadurch gekennzeichnet**, daß eine Befestigungseinrichtung zum axialen Festlegen der Saugglocke gegenüber dem Dorn vorgesehen ist.

19. Vorrichtung nach einem der vorangegangenen Ansprüche, **dadurch gekennzeichnet**, daß die Befestigungseinrichtung eine in eine sich im wesentlichen radiale, mit einem Gewinde versehenen Öffnung der Saugglocke im Halteabschnitt eingeschraubte Schraube aufweist wird, die mit dem Dorn in Anlage bringbar ist.
